**Europäisches Patentamt**

**European Patent Office**

**Office européen des brevets**

(19)

(11) Veröffentlichungsnummer : **0 556 414 B1**

(12) # EUROPÄISCHE PATENTSCHRIFT

(45) Veröffentlichungstag der Patentschrift :
**18.05.94 Patentblatt 94/20**

(51) Int. Cl.$^5$ : **C09D 5/34**

(21) Anmeldenummer : **92101855.2**

(22) Anmeldetag : **05.02.92**

(54) **Dauerelastische Mehrzweckmasse und Verfahren zur deren Herstellung.**

(43) Veröffentlichungstag der Anmeldung :
**25.08.93 Patentblatt 93/34**

(45) Bekanntmachung des Hinweises auf die
Patenterteilung :
**18.05.94 Patentblatt 94/20**

(84) Benannte Vertragsstaaten :
**AT CH DE FR GB IT LI LU NL**

(56) Entgegenhaltungen :
**DE-A- 2 345 031**
**DE-A- 2 827 637**

(73) Patentinhaber : **GERHARD KERTSCHER**
**CHEMISCHE BAUSTOFFE GmbH & Cie.**
**Busdorfwall 20**
**D-33098 Paderborn (DE)**

(72) Erfinder : **Bumbalek Alois**
**Von-der-Reck- Str. 2**
**W-4790 Paderborn 2 (DE)**

(74) Vertreter : **Richter, Werdermann & Gerbaulet**
**Neuer Wall 10**
**D-20354 Hamburg (DE)**

EP 0 556 414 B1

## Beschreibung

Die Erfindung betrifft eine dauerelastische Mehrzweckmasse aus zwei getrennten, zusammenwirkenden Massen.

Es ist bekannt, zu Dichtungs-, Beschichtungs- und Isolier-Zwecken elastische Spachtel- und Klebemassen in den verschiedensten Zusammensetzungen zu verwenden. Die pastenförmigen Klebemassen dienen zum Ausfüllen von Fugen, Rissen und Fehlstellen; sie sind bei Raumtemperatur fest und erweichen in der Wärme. Reaktions-Klebemassen bestehen aus mehreren Komponenten, die kurz vor Gebrauch gemischt werden und durch chemische Reaktionen erhärten. Abdunst-Klebemassen enthalten die festen Kittsubstanzen bzw. Grundsubstanzen in einem flüchtigen Lösemittel gelöst. Die pastöse Beschaffenheit der Klebe- und Dichtungsmassen wird durch Füllstoffanteile erreicht. Als Rohstoffbasis für dauerelastische Zweikomponenten-Dichtungsmassen werden Polysulfide, für dauerelastische Einkomponenten-Dichtungsmassen ebenfalls Polysulfide, ferner SIR, AR, PUR und Acrylharz eingesetzt. Für dauerelastische Dichtungsmassen werden PIB, IIR u.dgl. verwendet. Des weiteren werden als Dichtungsmassen, die in flüssiger bis zähflüssiger Form aufgebracht werden, Bitumina, Kunstharze und Schaumstoffe, u.a. auch auf der Basis von Silikonen und Polysulfide, eingesetzt.

Die bekannten u.a. auch dauerelastischen Dichtungs- und Isoliermassen verlieren im Laufe ihrer Zeit ihre Dauerelastizität; ihr Haftvermögen an einem feuchten Untergrund oder feuchten Wänden ist gering und auch unter Wasser sind diese Massen nicht einsetzbar. Ist ein Aufbringen dieser Dichtungs- und Isoliermassen auf einem feuchten Untergrund erforderlich, so bedarf es einer vorherigen Untergrundbehandlung, sei es durch Einsatz von Trocknungsverfahren oder chemischer Mittel. In zahlreichen Fällen verhärtet das eingesetzte Material schon nach wenigen Monaten und verliert somit seine Dauerelastizität. Der Alterungsprozeß derartiger Massen verläuft durch chemische Einflüsse relativ schnell. Die bekannten Spachtel- und Beschichtungsmassen sind nicht wasserbelastbar und nicht einsetzbar unter fließendem Wasser. Die physikalischen und mechanischen Eigenschaften sind für den Einsatz derartiger Massen bei Kanalsystemen und insbesondere für die Instandsetzung und Sanierung von Abwassersystemen nur begrenzt geeignet. Auch die chemische Beständigkeit ist oftmals gering.

Durch die DE-A-28 27 637 ist eine Zubereitung zum Abdichten von Tanks und Rohrleitungen bekannt, die aus zwei getrennten, zusammenwirkenden Massen besteht, von denen jede eine kittartige oder kittähnliche Konsistenz aufweist. Die erste der beiden Massen wird aus einem flüssigen Epoxidharz und aus einem pulverförmigen oder feinteiligen inerten Füllstoff sowie aus einem wachsartigen Material hergestellt, das bei Zimmertemperatur oder Umgebungstemperatur fest und das in dem flüssigen Epoxidharz löslich ist. Die erste Masse kann kleine oder kleinere Anteile verschiedener ergänzender Bestandteile enthalten. In zweckmäßiger Weise enthält diese Masse sowohl den Füllstoff als auch das Wachs oder ein wachsartiges Material, wobei diese Masse eine kittartige oder kittähnliche Konsistenz aufweist.

Die zweite Masse enthält ein Härtungsmittel für das Epoxidharz der ersten Masse und ein pulverförmiges oder feinteiliges inertes Füllmaterial sowie ein Wachs oder ein wachsartiges Material, das bei Zimmertemperatur oder Umgebungstemperatur fest ist. Auch diese Masse kann sowohl den Füllstoff als auch das Wachs oder wachsartige Material enthalten; sie liegt ebenso in einer kittartigen oder kittähnlichen Konsistenz vor. Eine derartige, aus zwei Massen bestehende Zubereitung besitzt am Anfang eine kittähnliche Konsistenz; sie enthält Massen auf der Basis von Epoxidharzen, Härtungsmittel für diese Harze, Wachse sowie wachsartige Materialien und Füllstoffe.

Die DE-A- 23 45 031 beschreibt Kunstharzmassen zur Herstellung von Beschichtungsmassen oder Formteilen und zur Verfüllung von Hohlräumen. Diese Kunstharzmassen werden unter Verwendung von Härtern und Füllstoffen zur Verwendung als Beschichtungs- und Verfüllungsmassen hergestellt, wobei als härtbare Kunststoffmassen Epoxidharze, Polyesterharze, Polyurethanharze, Acrylatharze und Phenolharze eingesetzt werden, während als Härter Polyamine und Polyaminoamide verwendet werden. Wesentlich ist hier jedoch, daß zwei unterschiedliche Füllstoffe eingesetzt werden, von denen es sich bei dem einen Füllstoff um einen Mikrofüllstoff handelt, der gegenüber dem grobkörnigen Füllstoff eine geringere Härte aufweist. Eine derartige Kunstharzmasse soll eine hohe Festigkeit besitzen.

Die bekannten Kunstharzmassen weisen jedoch aufgrund ihrer Zusammensetzungen keine hohe Dauerelastizität auf; sie lassen sich auch nicht auf nassen Oberflächen verarbeiten, was einerseits auf den hohen Prozentsatz der eingesetzten Füllstoffe und andererseits auf einzuhaltende lange Aushärtzeiten zurückzuführen ist.

Der Erfindung liegt die Aufgabe zugrunde, eine dauerelastische Mehrzweckmasse aus zwei Komponenten zu schaffen, die besonders für eine Spachtelung und Beschichtung von nassen Oberflächen geeignet ist, die unter Wasserbelastung einsetzbar ist und die eine hohe chemische Beständigkeit gegen Lösungsmittel, anorganische Säuren, organische Säuren, Laugen und andere aggressive Medien aufweist. Des weiteren soll die Mehrzweckmasse eine hohe Dauerelastizität auch über einen längeren Zeitraum aufweisen.

Gelöst wird die Aufgabe bei einer dauerelastischen Mehrzweckmasse durch eine Mischung mit der in den Ansprüchen 1 und 2 angegebenen Zusammensetzung.

Hiernach besteht die Mehrzweckmasse nach einer ersten Ausführungsform der Erfindung aus einer Grundmasse aus einer bei Temperaturen zwischen 5°C und 60°C hergestellten Mischung aus

a) Bisphenol,
b) einer anionischen Bitumenemulsion,
c) Polyacrylnitril-co-butadien,
d) einem Polymer der Ether- und Urethangruppen

und aus einem Härter aus einer bei Temperaturen zwischen 5°C und 50°C hergestellten Mischung aus

a) Isophorondiisocyanat (EPD),
b) Trimethylhexamethylamin (TMD),
c) Polyaminoamiden,
d) Polyetherurethanamin,
e) einem Katalysator, bevorzugterweise auf der Basis von Aminen, Polyaminoamiden, -imidazolinen u.a. Verbindungen,
f) 2,4,6-Tris-(dimethylaminomethyl)-phenol.

Nach einer zweiten Ausführungsform der Erfindung ist in der Grundmasse das Polyacrylnitril-co-butadien durch das Poly(2-Chlorbutadien) ersetzt.

Darüber hinaus ist es vorteilhaft, wenn der Grundmasse Trioctylphosphat zugesetzt ist.

Die erfindungsgemäße Mehrzweckmasse ist ferner noch dadurch gekennzeichnet, daß der Grundmasse Füllstoffe, wie Schwerspat, Titandioxid, Basalt, Perlite in Staub- oder Kugelform oder als Granulat, Styropor in pulverisierter oder Kugel-Form mit einem bevorzugten Durchmesser von 1 bis 3 mm, natürliche oder künstliche Fasern, Fasern aus Kohlenstoff, Glas, Aluminiumoxid, Silicium, Glimmer, Kaolin zugesetzt sind, wobei dieser Komponente I auch Additive, wie Dispergiermittel, Entschäumer, Emulgatoren, Verlaufmittel zugesetzt sein können. Das Mischungsverhältnis von Grundmasse und Härter beträgt 3 bis 5:1, wobei das Vermischen in einem Zeitraum von bevorzugterweise 10 bis 15 Minuten erfolgt. Auch kann der aus der Grundmasse und dem Härter hergestellten Zwei-Komponenten-Elastomermasse feiner Quarzsand oder Balsaltsand im Verhältnis 1:1 bis 1,5 zugesetzt sein.

Überraschenderweise wurde aufgefunden, daß eine Mehrzweckmasse in der erfindungsgemäßen Zusammensetzung eine dauerelastische Dichtungs- und Isoliermasse darstellt, die im wesentlichen aus Epoxidharzen, Chlor- und/oder Acrylnitrilbutadien, Polymeren der Ether- und Urethangruppen und Bitumenemulsionen, wie z.B. Teer, sowie einem Härtersystem, besteht und für eine Spachtelung und Beschichtung von feuchten und nassen Oberflächen und Wandflächen und insbesondere auch unter Wasserbelastung eingesetzt werden kann. Die Mehrzweckmasse weist ein hohes Haftzugvermögen auf und ist aus diesem Grunde auch auf nassen Oberflächen aufbringbar, ohne daß die Oberflächen vorbehandelt werden müssen. Die Dauerelastizität der Mehrzweckmasse bleibt auch über einen längeren Zeitraum erhalten; auch nach Jahren ist die verlegte Mehrzweckmasse nicht verhärtet und weist aus diesem Grunde seine ursprüngliche Dauerelastizität auf. Gerade bei Wasserbelastung und bei fließenden Gewässern ist die Mehrzweckmasse erfolgreich anwendbar, wenn z.B. Mauerwerk oder Beton, der unter fließendem Wasser steht, beschichtet werden soll. Aus diesem Grunde ist die Mehrzweckmasse zur Sanierung von Kanal- und Abwässersystemen geeignet, wobei eine Beschichtung der zu behandelnden Flächen manuell oder mittels geeigneter, ausgebildeter Geräte oder Maschinen erfolgen kann. Auch zum Ausfüllen von Dichtungsfugen ist die Mehrzweckmasse erfolgreich einsetzbar; sie ist auf der zu sanierenden Oberfläche spachtelbar, sie kann injiziert und zur Glättung von Oberflächen herangezogen werden. Eine an feuchten Wänden aufgebrachte Mehrzweckmasse haftet über einen sehr langen Zeitraum, ohne daß ein Abblättern von der Oberfläche erfolgt. Die physikalischen und mechanischen Eigenschaften der Mehrzweckmasse ermöglichen insbesondere deren Einsatz bei der Sanierung von Kanalsystemen, für die Instandsetzung und Sanierung, insbesondere auch von feuchten und nassen Flächen inklusiv unter Wasser. Die Reißdehnung, das Elastizitätsmodul, die Shore A-Härte sind optimal; die Zugfestigkeit ist gegenüber bekannten Massen verbessert. Die Biegezugfestigkeit kann über Füllstoffe geregelt werden. Außerdem weist die Mehrzweckmasse eine hohe Temperaturbeständigkeit auf und ist auch bei Temperaturen unter 0°C einsetzbar, ohne daß die Dauerelastizität beeinträchtigt wird. Die chemische Beständigkeit der Mehrzweckmasse gegenüber Lösungsmitteln, anorganischen und organischen Säuren, Laugen und anderen aggressiven Medien ist verbessert und optimiert worden. Diese chemischen, physikalischen und mechanischen Eigenschaften werden durch die Zusammensetzung der Mehrzweckmasse aus der miteinander vermischten Grundmasse und dem Härter erhalten.

Physikalische Eigenschaften einer dauerelastischen Dichtungs- und Isoliermasse:

1. Dichte: 1,1 bis 1,8 g/cm³ (steuerbar)

2. Shore A-Härte: 40 - 90 (steuerbar)

3. Zugfestigkeit: 10 - 25 N/mm² für ungefüllte Masse

4. Zugfestigkeit: größer als 5,5 N/mm² für Masse mit ca. 50 Gew.-% Füllstoff

5. Reißdehnung: 400 - 500% für ungefüllte Masse

6. Reißdehnung: größer als 150% für Masse mit ca. 50 Gew.-% Füllstoff

7. Chemische Beständigkeit gegen
- Oxidation: gut bis sehr gut
- Mineralöl: sehr gut
- Säuren,Laugen: gut

8. Temperaturbeständigkeit: -40°C bis +90°C.

Des weiteren betrifft die Erfindung ein Verfahren zur Herstellung der voranstehend beschriebenen dauerelastischen Mehrzweckmasse, wobei das Verfahren darin besteht, daß man eine Grundmasse aus einer bei Temperaturen zwischen 5°C und 60°C hergestellten Mischung

a) Bisphenol,

b) einer anionischen Bitumenemulsion,

c) Polyacrylnitril-co-butadien,

d) einem Polymer der Ether- und Urethangruppen

und einem Härter aus einer bei Temperaturen zwischen 5°C und 50°C hergestellten Mischung aus

a) Isophorondiisocyanat (IPD),

b) Trimethylhexamethylamin (TMD),

c) Polyaminoamiden,

d) Polyetherurethanamin,

e) einem Katalysator, bevorzugterweise auf der Basis von Aminen, Polyaminoamiden, -imidazolinen u.a. Verbindungen,

f) 2,4,6-Tris-(dimethylaminomethyl)-phenol mit einem Mischungsverhältnis von 3 bis 5:1 bei einer Zeit von 10 bis 15 Minuten miteinander vermischt.

Topfzeit: 90 Minuten

Erstarrung: nach 180 Minuten.

Das in der Grundmasse eingesetzte Polyacrylnitril-co-butadien kann nach einer weiteren Ausführungsform durch das Poly(2-Chlorbutadien) ersetzt werden.

Um die mechanischen und physikalischen Eigenschaften der Mehrzweckmasse den jeweiligen Erfordernissen anpassen zu können, ist die nach dem Verfahren hergestellte Mehrzweckmasse mit Füllstoffen und-/oder Additiven versehen, die der Grundmasse zu Beginn der Verfahrensstufe zugesetzt werden. Als Dispergiermittel finden solche Substanzen Anwendung, die das Dispergieren von Teilchen in einem Dispersionsmittel erleichtern, indem sie die Grenzflächenspannung zwischen zwei Komponenten erniedrigen, also eine Benetzung herbeiführen. Diese Dispergiermittel umfassen Additive, Absetzungsverhinderungsmittel, Netzmittel, Detergentien, Suspendierhilfen und Emulgatoren. Die Additive werden bevorzugterweise in kleinen Mengen zugesetzt, um die Eigenschaften der herzustellenden Mehrzweckmasse in gewünschter Richtung zu verändern oder deren Verarbeitbarkeit zu erleichtern. Eingesetzt werden die an sich bekannten Additive. Die Auswahl geeigneter Emulgatoren hängt immer vom Verwendungszweck ab. Neben anionischen können auch kationische Emulgatoren sowie amphotere und zwitterionische Emulgatoren sowie auch nichtionische Emulgatoren eingesetzt werden. Als Entschäumer bzw. Antischaummittel können z.B. langkettige Alkohole, hochpolymere Glykole, Gemische dieser Alkohole mit Fetten, Fettsäurepolyglykolester und Trialkylmelamine eingesetzt werden; auch Silicone können hier Verwendung finden. Als Füllstoffe findet z.B. Schwerspat, Titandioxid, Basalt, Perlite in Staub- oder Kugelform oder in Form eines Granulats Anwendung; auch Styropor in pulverisierter oder Kugel-Form mit einem bevorzugten Durchmesser von 1 bis 3 mm sowie natürliche oder künstliche Fasern und Fasern aus Kohlenstoff, Glas, Aluminiumoxid können zum Einsatz gelangen, ebenso auch Silikate. Als Verlaufmittel eignen sich Glykole und Glykolether sowie Silikonöle.

Die Grundmasse der Mehrzweckmasse enthält u.a. Bisphenol. Hier kann sowohl das Bisphenol A als auch das Bisphenol F eingesetzt werden. Anstelle des Trioctylphosphats können auch andere Abkömmlinge des Phosphorsäureesters eingesetzt werden. Als Polyaminoamid kann z.B. das unter dem Handelsnamen "Euredur" bekannte Produkt verwendet werden. Hierbei handelt es sich um einen Härter für Epoxidharze auf der Basis von Aminen, Polyaminoamiden, -imidazolinen und ähnlichen Verbindungen.

Der aus der Grundmasse und dem Härter bestehende Mehrzweckmasse ist nach einem weiteren Verfahrensweg feiner Glimmer-, Quarz- oder Basaltsand mit Korngröße 0,25-0,50 mm im Verhältnis 1:1 bis 1,5 zu-gesetzt.

EP 0 556 414 B1

Beispielrezeptur: 2-komponentig

Grundmasse:

| | |
|---|---|
| 1. Bisphenol A/F | 6,0 – 12 Gew.-% |
| 2. Polyacrylnitril-co-butadien | 10,0 – 20 Gew.-% |
| 3. Trioctylphosphat | 3,0 – 6 Gew.-% |
| 4. 2,4,7,9-tetramethyl-dec-5 in 4,7,-diol in Ethanol | 0,5 – 2 Gew.-% |
| 5. Diglycidylether mit Neopentylglycol | 6,0 – 12 Gew.-% |
| 6. Benzylalkohol | 2,0 – 5 Gew.-% |
| 7. Füllstoffe (Schwerspat,Basalt,Talkum, Quarz,Glimmer) | 30,0 – 50 Gew.-% |
| 8. Entschäumer | 0,5 – 1 Gew.-% |

Härter

| | |
|---|---|
| 1. Polyaminoamiden | 25,0 – 45 Gew.-% |
| 2. tertiäre Amine | 8,0 – 12 Gew.-% |
| 3. Trimethylhexamethylamin | 6,0 – 12 Gew.-% |
| 4. 2,4,6,-tris-dimethylaminomethyl-phenol | 25,0 – 35 Gew.-% |
| 5. Dimethylbenzylamin | 2,0 – 4 Gew.-% |
| 6. Isophorondiisocyanat | 8,0 – 12 Gew.-% |
| 7. Füllstoffe: Glimmer,MgO,SiO$_2$ | 10,0 – 20 Gew.-% |
| 8. Entschäumer/Entlüfter | 0,5 – 1 Gew.-% |

Mischverhältnis von Grundmasse:Härter = 3 bis 5:1

**Patentansprüche**

1. Dauerelastische Mehrzweckmasse aus zwei getrennten, zusammenwirkenden Massen, dadurch gekennzeichnet, daß die Mehrzweckmasse aus einer Mischung aus einer Grundmasse aus einer bei Temperaturen zwischen 5°C und 60°C hergestellten Mischung aus

a) Bisphenol,
b) einer anionischen Bitumenemulsion,
c) Polyacrylnitril-co-butadien,
d) einem Polymer der Ether- und Urethangruppen

und aus einem Härter aus einer bei Temperaturen zwischen 5°C und 50°C hergestellten Mischung aus

a) Isophorondiisocyanat (IPD),
b) Trimethylhexamethylamin (TMD)
c) Polyaminoamiden,
d) Polyetherurethanamin,
e) einem Katalysator, bevorzugterweise auf der Basis von Aminen, Polyaminoamiden, -imidazolinen u.a. Verbindungen,
f) 2,4,6,-Tris-(dimethylaminomethyl)-phenol

besteht.

5

2. Dauerelastische Mehrzweckmasse aus zwei getrennten, zusammenwirkenden Massen, dadurch gekennzeichnet, daß die Mehrzweckmasse aus einer Mischung aus einer Grundmasse aus einer bei Temperaturen zwischen 5°C und 60°C hergestellten Mischung aus

    a) Bisphenol,
    b) einer anionischen Bitumenemulsion,
    c) Poly (2-Chlor-butadien),
    d) einem Polymer der Ether- und Urethangruppen

und aus einem Härter aus einer bei Temperaturen zwischen 5°C und 50°C hergestellten Mischung aus

    a) Isiophorondiisocyanat (IPD),
    b) Trimethylhexamethylamin (TMD),
    c) Polyaminoamiden,
    d) Polyetherurethanamin,
    e) einem Katalysator, bevorzugterweise auf der Basis von Aminen, Polyaminoamiden, -imidazolinen u.a. Verbindungen,
    f) 2,4,6,-Tris-(dimethylaminomethyl)-phenol

besteht.

3. Mehrzweckmasse nach einem der Ansprüche 1 und 2, dadurch gekennzeichnet, daß die Grundmasse zusätzlich Trioctylphosphat enthält.

4. Mehrzweckmasse nach einem der Ansprüche 1 bis 3, dadurch gekennzeichnet, daß der Grundmasse Füllstoffe, wie Schwerspat, Titandioxid, Basalt, Perlite in Staub- oder Kugelform oder als Granulat, Styropor in pulverisierter oder Kugel-Form mit einem bevorzugten Durchmesser von 1 bis 3 mm, natürliche oder künstliche Fasern, Fasern aus Kohlenstoff, Glas, Aluminiumoxid, Silicium, zugesetzt sind.

5. Mehrzweckmasse nach einem der Ansprüche 1 bis 4, dadurch gekennzeicnnet, daß der Grundmasse Additive, wie Dispergiermittel, Entschäumer, Emulgatoren, Verlaufmittel, zugesetzt sind.

6. Mehrzweckmasse nach einem der Ansprüche 1 bis 5, dadurch gekennzeichnet, daß die Grundmasse und der Härter in einem Mischungsverhältnis von 3 bis 5:1 bei einer Zeit von 10 bis 15 Minuten miteinander vermischt werden.

7. Mehrzweckmasse nach einem der Ansprüche 1 bis 6, dadurch gekennzeichnet, daß die aus der Grundmasse und dem Härter hergestellte Zwei-Komponenten-Elastomermasse (Spachtelmasse) mit feinem Quarz- oder Basaltsand im Verhältnis 1:1 bis 1,5 angereichert wird.

8. Verfahren zur Herstellung einer dauerelastischen Mehrzweckmasse aus zwei getrennten, zusammenwirkenden Massen, dadurch gekennzeichnet, daß man eine Grundmasse aus einer bei Temperaturen zwischen 5°C und 60°C hergestellten Mischung aus

    a) Bisphenol,
    b) einer anionischen Bitumenemulsion,
    c) Polyacrylnitril-co-butadien,
    d) einem Polymer der Ether- und Urethangruppen

und einen Härter aus einer bei Temperaturen zwischen 5°C und 50°C hergestellten Mischung aus

    a) Isophorondiisocyanat (IPD),
    b) Trimethylhexamethylamin (TMD),
    c) Polyaminoamiden,
    d) Polyetherurethanamin,
    e) einem Katalysator, bevorzugterweise auf der Basis von Aminen, Polyaminoamiden, -imidazolinen u.a. Verbindungen,
    f) 2,4,6-Tris-(dimethylaminomethyl)-phenol

mit einem Mischungsverhältnis von 3 bis 5:1 bei einer Zeit von 10 bis 15 Minuten miteinander vermischt.

9. Verfahren zur Herstellung einer dauerelastischen Mehrzweckmasse aus zwei getrennten, zusammenwirkenden Massen, dadurch gekennzeichnet, daß man eine Grundmasse aus einer bei Temperaturen zwischen 5°C und 60°C hergestellten Mischung aus

    a) Bisphenol,
    b) einer anionischen Bitumenemulsion,
    c) Poly (2-Chlor-butadien),

d) einem Polymer der Ether- und Urethangruppen

und einen Härter aus einer bei Temperaturen zwischen 5°C und 50°C hergestellten Mischung aus

    a) Isophorondiisocyanat (IPD),

    b) Trimethylhexamethylamin (TMD),

    c) Polyaminoamiden,

    d) Polyetherurethanamin,

    e) einem Katalysator, bevorzugterweise auf der Basis von Aminen, Polyaminoamiden, -imidazolinen u.a. Verbindungen,

    f) 2,4,6-Tris-(dimethylaminomethyl)-phenol

mit einem Mischungsverhältnis von 3 bis 5:1 bei einer Zeit von 10 bis 15 Minuten miteinander vermischt.

10. Verfahren nach einem der Ansprüche 8 und 9, dadurch gekennzeichnet, daß der Grundmasse Trioctylphosphat zugesetzt wird.

11. Verfahren nach einem der Ansprüche 8 bis 10, dadurch gekennzeichnet, daß der Grundmasse Füllstoffe, wie Schwerspat, Titandioxid, Basalt, Perlite in Staub- oder Kugelform oder als Granulat, Styropor in pulverisierter oder Kugel-Form mit einem bevorzugten Durchmesser von 1 bis 3 mm, natürliche oder künstliche Fasern, Fasern aus Kohlenstoff, Glas, Aluminiumoxid, Silicium, zugesetzt werden.

12. Verfahren nach einem der Ansprüche 8 bis 11, dadurch gekennzeichnet, daß der Grundmasse Additive, wie Dispergiermittel, Entschäumer, Emulgatoren, Verlaufmittel, zugesetzt werden.

13. Verfahren nach einem der Ansprüche 8 bis 12, dadurch gekennzeichnet, daß die aus der Grundmasse und dem Härter hergestellte Zwei-Komponenten-Elastomermasse (Spachtelmasse) mit feinem Quarz- oder Basaltsand im Verhältnis 1:1 bis 1,5 angereichert wird.

14. Verfahren nach einem der Ansprüche 8 bis 13, dadurch gekennzeichnet, daß die dauerelastische Mehrzweckmasse einer Mischung der Grundmasse und dem Härter in einem Mischungsverhältnis der Grundmasse zum Härter wie 3 bis 5:1 besteht, wobei sich die Grundmasse aus

    1. 6,0 - 12 Gew.-% Bisphenol A/F

    2. 10,0 - 20 Gew.-% Polyacrylnitril-co-butadien

    3. 3,0 - 6 Gew.-% Trioctylphosphat

    4. 0,5 - 2 Gew.-% 2,4,7,9-tetramethyl-dec-5 in 4,7,-diol in Ethanol

    5. 6,0 - 12 Gew.-% Diglycidylether mit Neopentylglycol

    6. 2,0 - 5 Gew.-% Benzylalkohol

    7. 30,0 - 50 Gew.-% Füllstoffe (Schwerspat,Basalt,Talkum, Quarz,Glimmer)

    8. 0,5 - 1 Gew.-% Entschäumer

und der Härter aus

    1. 25,0 - 45 Gew.-% Polyaminoamiden

    2. 8,0 - 12 Gew.-% tertiäre Amine

    3. 6,0 - 12 Gew.-% Trimethylhexamethylamin

    4. 25,0 - 35 Gew.-% 2,4,6,-tris-dimethylaminomethylphenol

    5. 2,0 - 4 Gew.-% Dimethylbenzylamin

    6. 8,0 - 12 Gew.-% Isophorondiisocyanat

    7. 10,0 - 20 Gew.-% Füllstoffe: Glimmer, MgO,SiO$_2$

    8. 0,5 - 1 Gew.-% Entschäumer/Entlüfter zusammensetzen.

15. Verwendung einer dauerelastischen Zwei-Komponenten-Mehrzwecknmasse aus einer Mischung aus einer Grundmasse aus einer bei Temperaturen zwischen 5°C und 60°C hergestellten Mischung aus

    a) Bisphenol

    b) einer anionischen Bitumenemulsion,

    c) Polyacrylnitril-co-butadien,

    d) einem Polymer der Ether- und Urethangruppen

und aus einem Härter aus einer bei Temperaturen zwischen 5°C und 50°C hergestellten Mischung aus

    a) Isophorondiisocyanat (IPD),

    b) Trimethylhexmathylamin (TMD),

    c) Polyaminoamiden,

    d) Polyetherurethanamin,

    e) einem Katalysator, bevorzugterweise auf der Basis von Aminen, Polyaminoamiden, -imidazolinen u.a. Verbindungen,
f) 2,4,6-Tris-(dimethylaminomethyl)-phenol,

wobei die Grundmasse und der Härter in einem Verhätlnis von 3 bis 5:1 miteinander vermischt sind, als Dichtungs-, Beschichtungs- und Isoliermasse zwecks Erhöhung der Dauerelastizität im verarbeiteten Zustand über einen langen Zeitraum bei gleichzeitiger Haftverbesserung auch auf feuchtem Untergrund und für Wasserbelastung.

16. Verwendung einer dauerelastischen Zwei-KomponentenMehrzweckmasse aus einer Mischung aus einer Grundmasse aus einer bei Temperaturen zwischen 5°C und 60°C hergestellten Mischung aus

a) Bisphenol,
b) einer anionischen Bitumenemulsion,
c) Poly (2-Chlor-butadien),
d) einem Polymer der Ether- und Urethangruppen

und aus einem Härter aus einer bei Temperaturen zwischen 5°C und 50°C hergestellten Mischung aus

a) Isophorondiisocyanat (IPD),
b) Trimethylhexamethylamin (TMD),
c) Polyaminoamiden,
d) Polyetherurethanamin,
e) einem Katalysator, bevorzugterweise auf der Basis von Aminen, Polyaminoamiden, -imidazolinen u.a. Verbindungen,
f) 2,4,6-Tris-(dimethylaminomethyl)-phenol,

wobei die Grundmasse und der Härter in einem Verhältnis von 3 bis 5:1 miteinander vermischt sind, als Dichtungs-, Beschichtungs- und Isoliermasse zwecks Erhöhung der Dauerelastizität im verarbeiteten Zustand über einen langen Zeitraum bei gleichzeitiger Haftverbesserung auch auf feuchtem Untergrund und für Wasserbelastung.

17. Verwendung einer Mehrzweckmasse nach einem der Ansprüche 15 und 16 , bei der die Grundmasse Trioctylphosphat enthält.

18. Verwendung einer Mehrzweckmasse nach einem der Ansprüche 15 bis 17, bei der der Grundmasse Füllstoffe, wie Schwerspat, Titandioxid, Basalt, Perlite in Staub- oder Kugelform oder als Granulat, Styropor in pulverisierter oder Kugel-Form mit einem bevorzugten Durchmesser von 1 bis 3 mm, natürliche oder künstliche Fasern, Fasern aus Kohlenstoff, Glas, Aluminiumoxid, Silicium, zugesetzt sind.

19. Verwendung einer Mehrzweckmasse nach einem der Ansprüche 15 bis 18, bei der der Grundmasse Additive, wie Dispergiermittel, Entschäumer, Emulgatoren, Verlaufmittel zugesetzt sind.

20. Verwendung einer Mehrzweckmasse nach einem der Ansprüche 15 bis 19, bei der die aus der Grundmasse und dem Härter hergestellte Zwei-Komponenten-Elastomermasse (Spachtelmasse) mit feinem Quarz- oder Basaltsand im Verhältnis 1:1 bis 1,5 angereichert ist.

## Claims

1. Permanently elastic multipurpose mass comprising two separate, interacting masses, **characterized in that**

   the multipurpose mass is comprised of a mixture of a base mass of a mixture prepared at temperatures of between 5°C and 60°C of

   a) diphenol,
   b) an anionic bitumen emulsion,
   c) polyacrylonitrile-co-butadiene,
   d) a polymer of the ether and urethane groups,

   and of a hardening agent of a mixture prepared at temperatures of between 5°C and 50°C of

   a) isophorondiisocyanate (IPD),
   b) trimethylhexamethylamine (TMD),
   c) polyaminoamides,
   d) polyether urethamine,
   e) a catalyst, by preference on the basis of amines, polyaminoamides, polyimidazolines and other compounds,

    f) 2,4,6,-tris-(dimethyl aminomethyl)-phenol.

2. Permanently elastic multipurpose mass comprising two separate, interacting masses,
**characterized in that**
the multipurpose mass is comprised of a mixture of a base mass of a mixture prepared at temperatures of between 5° and 60° of

    a) diphenol,
    b) an anionic bitumen emulsion,
    c) poly (2-chloro-butadiene),
    d) a polymer of the ether and urethane groups

and of a hardening agent of a mixture prepared at temperatures of between 5°C and 50°C of

    a) isiophorondiisocyanate (IPD),
    b) trimethylhexamethylamine (TMD),
    c) polyaminoamides,
    d) polyether urethamine,
    e) a catalyst, by preference on the basis of amines, polyaminoamides, polyimidazolines and other compounds,
    f) 2,4,6 -tris-(dimethylaminomethyl)-phenol.

3. Multipurpose mass according to either Claim 1 or 2,
**characterized in that**
the base mass additionally contains trioctyl phosphate.

4. Multipurpose mass according to any of Claims 1 to 3,
**characterized in that**
filler materials are added to the base mass, such as heavy spar, titanium oxide, basalt, perlite in pulverulent or spherical form or in the form of a granulate, styroprene in pulverized or spherical form having a preferred diameter of 1 to 3 mm, natural or synthetic fibers, carbon fibers, glass, aluminum oxide, silicon.

5. Multipurpose mass according to any of Claims 1 to 4,
**characterized in that**,
to the base mass, additives, such as dispersants, foam inhibitors, emulsifiers, flow-control agents, are added.

6. Multipurpose mass according to any of Claims 1 to 5,
**characterized in that**
the base mass and the hardening agent are intermixed at a mixture ratio of from 3 to 5:1 over period of time of from 10 to 15 minutes.

7. Multipurpose mass according to any of Claims 1 to 6,
**characterized in that**
the two-component elastomer mass (filler) prepared from the base mass and the hardening agent is enriched with fine quartz or basalt sand at a ratio of from 1:1 to 1:5.

8. Process for the production of a permanently elastic multi-purpose mass comprising two separate, interacting masses,
**characterized in that**
a base mass of a mixture prepared at temperatures of between 5°C and 60°C of

    a) diphenol,
    b) an anionic bitumen emulsion,
    c) polyacrylnitrile-co-butadiene,
    d) and a polymer of the ether and urethane groups

and a hardening agent of a mixture prepared at temperatures between 5°C and 50°C of

    a) isophorondiisocyanate (IPD),
    b) trimethylhaxamethylamine (TMD),
    c) polyaminoamides,
    d) polyetherurethamine,
    e) a catalyst, by preference on the basis of amines, polyaminoamides, polyimidazolines and other compounds,

f) 2,4,6-tris-(dimethylaminoethyl)-phenol

are, at a mixing ratio of from 3 to 5:1, intermixed over a period of from 10 to 15 minutes.

9. Process for the production of a permanently elastic multi-purpose mass of two separate, interacting masses,

**characterized in that**

a base mass of a mixture prepared at temperatures of between 5°C and 60°C of

a) diphenol,

b) an anionic bitumen emulsion,

c) poly (2-chloro-butadiene),

d) a polymer of the ether and urethane groups

and a hardening agent prepared at temperatures of between 5°C and 50°C of

a) isophorondiisocyanate (IPD),

b) trimethylhexamethylamine (TMD)

c) polyaminoamides,

d) polyetherurethamine,

e) a catalyst, by preference on the basis od amines, polyaminoamides, polyimidazolines and other compounds,

f) 2,4,6-tris-(dimethylaminomethyl)-phenol

are intermixed at a mixing ratio of from 3 to 5:1 over a period of time of from 10 to 15 minutes.

10. Process according to any of Claims 8 and 9,

**characterized in that**

trioctyl phosphate is added to the base mass.

11. Process according to any of Claims 1 to 10,

**characterized in that,**

to the base mass, filling materials are added, such as heavy spar, titanium oxide, basalt, perlite in pulverulent or spherical form or in the form of a granulate, styroprene in a pulverized or spherical form having a preferred diameter of 1 to 3 mm, natural or synthetic fibers, carbon fibers, glass, aluminum oxide, silicon.

12. Process according to any of Claims 8 to 11,

**characterized in that,**

to the base mass, additives such as dispersants, foam inhibitors, emulsifiers, flow-control agents, are added.

13. Process according to any of Claims 1 to 12,

**characterized in that** the two-component elastomer mass (filler) prepared from the base mass and the hardening agent is enriched with fine quartz or basalt sand at a ratio of from 1:1 to 1:5.

14. Process according to any of Claims 8 to 13,

**characterized in that**

the permanently elastic multipurpose mass consists of a mixture of the base mass and the hardening agent at a mixing ratio of the base mass to the hardening agent of from 3 to 5:1, in which case the base mass is composed of

1. 6.0 - 12% by weight diphenol A/F

2. 10.0 - 20% by weight polyacrylonitrile-co-butadiene

3. 3.0 - 6% by weight trioctyl phosphate

4. 0.4 - 2& by weight 2,4,7,9-tetramethyl-dec-5 in 4.7 -diole in ethanol

5. 6.0 - 12% by weight diglycidylether with neopentyl glycol

6. 6.0 - 2% by weight benzyl alcohol

7. 30.0 - 50% by weight filling materials (heavy spar, basalt, talcum, quartz, mica).

8. 0.5 - 1% by weight foam inhibitor

and the hardening agent is composed of

1. 25.0 - 45% by weight polyaminoamides

2. 8.0 - 12% by weight tertiary amines

3. 6.0 - 12% by weight trimethylhexamethylamine

4. 25.0 - 35% by weight 2,4,6,-tris-dimethylaminomethylphenol

5. 2.0 - 4% by weight dimethylbenzylamine

6. 8.0 - 12% by weight isophorondiisocyanate

7. 10.0 - 20% by weight filling materials: mica, MgO, $SiO_2$

8. 0.5 - 1% by weight foam inhibitor/de-aerator

15. Employment of a permanently elastic two-component mass comprising a mixture of a base mass of a mixture prepared at temeperatures of between 5°C and 60°C of

    a) diphenol,

    b) an anionic bitumen emulsion,

    c) polyacrylonitrile-co-butadiene,

    d) a polymer of the ether or urethane groups

and of a hardening agent of a mixture prepared at temperatures of between 5°C and 50°C of

    a) isophorondiisocyanate (IPD),

    b) trimethylhexamethylamine (TMD),

    c) polyaminoamides,

    d) polyetherurethanamine,

    e) a catalyst, by preference on the basis of amines, polyaminoamides, polyimidazolines and other compounds,

    f) 2,4,6-tris-(dimethylaminomethyl)-phenol,

in which the base mass and the hardening agent are inter-mixed at a ratio of from 3 to 5:1, as sealing, coating amd insulating mass for the purpose of increasing the permanent elasticity in the processed state over a prolonged period of time while at the same time improving the adhesion also on damp subsoil and in the presence of water.

16. Employment of a permanently elastic two-component multi-purpose mass comprising a mixture of a base mass and a mixture prepared at temperatures of from 5°C to 60°C of

    a) diphenol,

    b) an anionic bitumen emulsion,

    c) poly (2-chloro-butadiene),

    d) a polymer of the ether and urethane groups

and of a hardening agent of a mixture prepared at temperatures of between 5°C and 50°C of

    a) isophorondiisocynate (IPD),

    b) trimethylhexamethylamine (TMD),

    c) polyaminoamides,

    d) polyetherurethanamine,

    e) a catalyst, by prefence on the basis of amines, polyaminoamides, polyimidazolines and other compounds,

    f) 2,4,6-tris-(dimethylaminomethyl)-phenol, in which the base mass and the hardening agent are inter-mixed at a ration of from 3 to 5:1, as sealing. coating and insulating mass for the purpose of increasing the permanent elasticity in the processed state over a prolonged period of time while at the same time improving the adhesion also on damp subsoil and in the presence of water.

17. Employment of a multipurpose mass according to either Claim 15 or 16, in which the base mass contains trioctyl phosphate.

18. Employment of a multipurpose mass according to any of Claims 15 to 17, in which, to the base mass, filler materials, such as heavy spar, titanium oxide, basalt, perlite in pulverulent or spherical form or in the form of a granulate, styroprene in pulverized or spherical form having a preferred diameter of 1 to 3 mm, natural or synthetic fibers, carbon fibers, glass, aluminum oxide, silicon, are added.

19. Employment of a multipurpose mass according to any of Claims 15 to 18, in which additives, such as dispersants, foam inhibitors, emulsifiers, flow-contol agents, are added to the base mass.

20. Employment of a multipurpsoe mass according to any of Claims 15 to 19, in which the two-component elastomer mass (filler) prepared from the base mass and the hardening agent is enriched with fine quartz or basalt sand at a ration of from 1:1 to 1:5.

**Revendications**

1.  Masse d'élasticité permanente à plusieurs usages constituée par deux masses séparées agissant ensemble, **caractérisée en ce** que la masse à plusieurs usages se compose d'un mélange à partir d'une masse de base constituée par un mélange fabriqué à des températures entre 5° C et 60° C de
    a) bisphénol,
    b) d'une émulsion de bitume anionique,
    c) de copolymère d'acrylonitrile-butadiène,
    d) d'un polymère des groupes des éthers et des uréthanes et d'un durcisseur à partir d'un mélange fabriqué à des températures entre 5° C et 50° C
    a) de diisocyanate d'isophorone,
    b) de triméthylhexaméthylamine,
    c) de polyaminoamides,
    d) de polyétheruréthanamine,
    e) d'un catalysateur, de préférence sur la base d'amines, de polyaminoamides, polyamidazolines et d'autres combinaisons,
    f) de tris(diméthylaminométhyl)-2,4,6 phénol.

2.  Masse d'élasticité permanente à plusieurs usages constituée par deux masses séparées agissant ensemble, **caractérisée en ce** que la masse à plusieurs usages se compose d'un mélange à partir d'une masse de base constituée par un mélange fabriqué à des températures entre 5° C et 60° C de
    a) bisphénol,
    b) d'une émulsion de bitume anionique,
    c) de poly(chloro-2 butadiène),
    d) d'un polymère des groupes des éthers et des uréthanes et d'un durcisseur à partir d'un mélange fabriqué à des températures entre 5° C et 50° C
    a) de diiosocyanate d'isophorone,
    b) de triméthylhexaméthylamine,
    c) de polyaminoamides,
    d) de polyétheruréthanamine,
    e) d'un catalysateur, de préférence sur la base d'amines, de polyaminoamides, polyamidazolines et d'autres combinaisons,
    f) de tris(diméthylaminométhyl)-2,4,6 phénol.

3.  Masse à plusieurs usages selon l'une des revendications 1 et 2, **caractérisée en ce** que la masse de base contient en plus du phosphate de trioctyle.

4.  Masse à plusieurs usages selon l'une des revendications 1 à 3, **caractérisée en ce** que des matières de remplissage, comme du spath pesant, de l'oxyde de titane, du basalte, de la perlite sous forme de poussière ou de boules ou de granulés, du polystyrène expansé sous forme pulvérisée ou de boules avec un diamètre préféré d'1 à 3 mm, de fibres naturelles ou artificielles, de fibres de carbone, de verre, d'oxyde d'aluminium, de silice, sont ajoutées à la masse de base.

5.  Masse à plusieurs usages selon l'une des revendications 1 à 4, **caractérisée en ce** que des additifs tels que agents dispersants, des agents antimoussants, des émulsifiants, des produits nivelants sont ajoutés à la masse de base.

6.  Masse à plusieurs usages selon l'une des revendications 1 à 5, **caractérisée en ce** que la masse de base et le durcisseur sont mélangés l'un à l'autre selon un rapport de mélange de 3 à 5:1 pendant une durée de 10 à 15 minutes.

7.  Masse à plusieurs usages selon l'une des revendications 1 à 6, **caractérisée en ce** que la masse d'élastomère à deux composants (mastic), fabriquée à partir de la masse de base et du durcisseur, est enrichie avec du sable silicieux ou du sable de basalte fin selon le rapport d'1:1 à 1:5.

8.  Procédé pour la fabrication d'une masse d'élasticité permanente à plusieurs usages composée de deux masses séparées agissant ensemble, **caractérisé en ce** que l'on mélange une masse de base composée d'un mélange fabriqué à des températures entre 5° C et 60° C de
    a) bisphénol,

b) d'une émulsion de bitume anionique,

c) de copolymère d'acrylonitrile-butadiène,

d) d'un polymère des groupes des éthers et des uréthanes et d'un durcisseur à partir d'un mélange fabriqué à des températures entre 5° C et 50° C

    a) de diisocyanate d'isophorone,

    b) de triméthylhexaméthylamine,

    c) de polyaminoamides,

    d) de polyétheruréthanamine,

    e) d'un catalysateur, de préférence sur la base d'amines, de polyaminoamides, polyamidazolines et d'autres combinaisons,

    f) de tris(diméthylaminométhyl)-2,4,6 phénol

avec un rapport de mélange de 3 à 5:1 pendant une durée de 10 à 15 minutes.

**9.** Procédé pour la fabrication d'une masse d'élasticité permanente à plusieurs usages composée de deux masses séparées agissant ensemble, **caractérisé en ce** que l'on mélange une masse de base composée d'un mélange fabriqué à des températures entre 5° C et 60° C de

    a) bisphénol,

    b) d'une émulsion de bitume anionique,

    c) de poly(chloro-2 butadiène),

    d) d'un polymère des groupes des éthers et des uréthanes et d'un durcisseur à partir d'un mélange fabriqué à des températures entre 5° C et 50° C

    a) de diisocyanate d'isophorone,

    b) de triméthylhexaméthylamine,

    c) de polyaminoamides,

    d) de polyétheruréthanamine,

    e) d'un catalysateur, de préférence sur la base d'amines, de polyaminoamides, polyamidazolines et d'autres combinaisons,

    f) de tris(diméthylaminométhyl)-2,4,6 phénol

avec un rapport de mélange de 3 à 5:1 pendant une durée de 10 à 15 minutes.

**10.** Procédé selon l'une des revendications 8 et 9, **caractérisé en ce** que du phosphate de trioctyle est ajouté à la masse de base.

**11.** Procédé selon l'une des revendications 8 à 10, **caractérisé en ce** que des matières de remplissage, comme du spath pesant, de l'oxyde de titane, du basalte, de la perlite sous forme de poussière ou de boules ou de granulés, du polystyrène expansé sous forme pulvérisée ou de boules avec un diamètre préféré d'1 à 3 mm, de fibres naturelles ou artificielles, de fibres de carbone, de verre, d'oxyde d'aluminium, de silice, sont ajoutées à la masse de base.

**12.** Procédé selon l'une des revendications 8 à 11, **caractérisée en ce** que des additifs tels que agents dispersants, des agents antimoussants, des émulsifiants, des produits nivelants sont ajoutés à la masse de base.

**13.** Procédé selon l'une des revendications 8 à 12, **caractérisé en ce** que la masse d'élastomère à deux composants (mastic), fabriquée à partir de la masse de base et du durcisseur, est enrichie avec du sable silicieux ou du sable de basalte fin selon le rapport d'1:1 à 1:5.

**14.** Procédé selon l'une des revendications 8 à 13, **caractérisé en ce** que la masse d'élasticité permanente à plusieurs usages se compose d'un mélange de la masse de base et du durcisseur selon un rapport de mélange de la masse de base et du durcisseur comme 3 à 5:1, la masse de base étant constituée par

    1) 6,0 à 12 % en poids de bisphénol

    2) 10,0 à 12 % en poids de copolymère d'acrylonitrile-butadiène

    3) 3,0 à 20 % en poids de phosphate de trioctyle

    4) 0,5 à 2 % en poids de tétraméthyl-2,4,7,9 décyne-5 diol-4,7 dans de l'éthanol

    5) 6,0 à 12 % en poids de diglycidyléther avec du néopentylglycol

    6) 2,0 à 5 % en poids d'alcool benzylique

    7) 30,0 à 50 % en poids de matières de remplissage (spath pesant, basalte, talc, quartz, mica)

    8) 0,5 à 1 % d'agent antimoussant

et le durcisseur par

1) 25,0 à 45 % en poids de polyaminoamides
2) 8,0 à 12 % en poids d'amines tertiaires
3) 6,0 à 12 % en poids de triméthylhexaméthylamine
4) de 25,0 à 35 % en poids de tris(diméthylaminométhyl)-2,4,6 phénol
5) de 2,0 à 4,0 % en poids diméthylbenzylamine
6) de 8,0 à 12 % en poids de diisocyanate d'isophorone
7) 10,0 à 20 % en poids de matières de remplissage : mica, MgO, SiO$_2$
8) de 0,5 à 1 % en poids d'agent antimoussant/agent d'aération.

15. Utilisation d'une masse d'élasticité permanente à deux composants à plusieurs usages constituée par une masse de base constituée par un mélange fabriqué à des températures entre 5° C et 60° C de
   a) bisphénol,
   b) d'une émulsion de bitume anionique,
   c) de poly(chloro-2 butadiène),
   d) d'un polymère des groupes des éthers et des uréthanes et d'un durcisseur constitué par un mélange fabriqué à des températures entre 5° C et 50° C
   a) de diisocyanate d'isophorone,
   b) de triméthylhexaméthylamine,
   c) de polyaminoamides,
   d) de polyétheruréthanamine,
   e) d'un catalysateur, de préférence sur la base d'amines, de polyaminoamides, de polyamidazolines et autres combinaisons,
   f) de tris(diméthylaminométhyl)-2,4,6 phénol,
   la masse de base et le durcisseur étant mélangés selon un rapport de 3 à 5:1, comme masse d'étanchéité, d'enduction et comme masse isolante pour augmenter l'élasticité permanente à l'état travaillé pendant une durée longue tout en améliorant simultanément l'adhérence même sur un support humide ou pour une sollicitation par de l'eau.

16. Utilisation d'une masse d'élasticité permanente à deux composants à plusieurs usages constituée par une masse de base constituée par un mélange fabriqué à des températures entre 5° C et 60° C de
   a) bisphénol,
   b) d'une émulsion de bitume anionique,
   c) de poly(chloro-2 butadiène),
   d) d'un polymère des groupes des éthers et des uréthanes et d'un durcisseur constitué par un mélange fabriqué à des températures entre 5° C et 50° C à partir
   a) de diisocyanate d'isophorone,
   b) de triméthylhexaméthylamine,
   c) de polyaminoamides,
   d) de polyétheruréthanamine,
   e) d'un catalysateur, de préférence sur la base d'amines, de polyaminoamides, de polymidazolines et autres combinaisons,
   f) de tris(diméthylaminométhyl)-2,4,6 phénol,
   la masse de base et le durcisseur étant mélangés selon un rapport de 3 à 5:1, comme masse d'étanchéité, d'enduction et comme masse isolante pour augmenter l'élasticité permanente à l'état travaillé pendant une durée longue tout en améliorant simultanément l'adhérence même sur un support humide ou pour une sollicitation par de l'eau.

17. Utilisation d'une masse à plusieurs usages selon l'une des revendications 15 et 16 pour laquelle la masse de base contient du phosphate de trioctyle.

18. Utilisation d'une masse à plusieurs usages selon l'une des revendications 15 à 17 pour laquelle des matières de remplissage, comme du spath pesant, de l'oxyde de titane, du basalte, de la perlite sous forme de poussière ou de boules ou de granulés, du polystyrène expansé sous forme pulvérisée ou de boules avec un diamètre préféré d'1 à 3 mm, de fibres naturelles ou artificielles, de fibres de carbone, de verre, d'oxyde d'aluminium, de silice, sont ajoutées à la masse de base.

19. Utilisation d'une masse à plusieurs usages selon l'une des revendications 15 à 18, **caractérisée en ce** que des additifs tels que agents dispersants, des agents antimoussants, des émulsifiants, des produits nivelants sont ajoutés à la masse de base.

20. Utilisation d'une masse à plusieurs usages selon l'une des revendications 15 à 19, **caractérisé en ce** que la masse d'élastomère à deux composants (mastic), fabriquée à partir de la masse de base et du durcisseur, est enrichie avec du sable silicieux ou du sable de basalte fin selon le rapport d'1:1 à 1:5.